# NEW EUROPEAN PATENT SPECIFICATION

(11) **EP 3 323 898 B2**
(45) Date of publication and mention of the opposition decision: **01.02.2023**
(45) Mention of the grant of the patent: 26.06.2019
(21) Application number: 17199759.6
(22) Date of filing: 02.11.2017
(51) Int. Cl.: C21B 3/08

(54) **SYSTEM, DRUM AND METHOD FOR COOLING AND RECYCLING WHITE SLAG USED IN A STEEL PRODUCTION PROCESS DESCRIPTION**
SYSTEM, TROMMEL UND VERFAHREN ZUR KÜHLUNG UND ZUM RECYCLING VON WEISSER SCHLACKE, DIE IN EINER STAHLPRODUKTIONSPROZESSBESCHREIBUNG VERWENDET WIRD
SYSTÈME, TAMBOUR ET PROCÉDÉ DE REFROIDISSEMENT ET DE RECYCLAGE DE SCORIES BLANCHES UTILISÉES DANS UNE DESCRIPTION DE PROCESSUS DE PRODUCTION D'ACIER

(30) Priority: 18.11.2016 IT 201600116956
(43) Date of publication of application: 23.05.2018
(73) Proprietor: Steb S.r.l., 25030 Corzano, Brescia (IT)
(72) Inventor: FERLINGHETTI, Giovanni, I-25030 Corzano, BRESCIA (IT)
(74) Representative: Pulieri, Gianluca Antonio

(56) References cited:
- EP-A1- 2 228 458
- EP-A1- 2 261 383
- EP-A1- 2 610 569
- EP-A2- 0 305 706
- EP-B1- 1 525 425
- EP-B1- 1 664 646
- EP-B1- 2 249 113
- WO-A1-00/01854
- WO-A1-99/54674
- WO-A1-2009/019601
- WO-A1-2012/066408
- WO-A1-2016/116884
- WO-A2-2012/026798
- AT-U1- 12 702
- CN-B- 103 194 552
- GB-A- 2 377 008
- GB-B- 2 194 798
- IT-A1- VE20 100 055
- US-A- 4 033 561
- US-A- 4 909 837
- US-A- 6 059 028
- US-A1- 2004 035 510
- US-A1- 2006 291 523
- US-A1- 2008 296 006
- US-A1- 2011 240 269
- US-A1- 2012 312 113
- US-A1- 2013 126 143
- US-A1- 2013 333 240
- US-B1- 6 330 269
- Chinese Text and Machine translation of Abstract and Description of CN201819585U
- Chinese Text and Machine translation of Abstract and Description of CN202126194U
- Chinese Text and Machine translation of Abstract and Description of CN103322560
- Chinese Text and Machine translation of Abstract and Description of CN203273879U
- Chinese Text and Machine translation of Abstract and Description of CN204786369U
- Chinese Text and Machine translation of Abstract and Description of CN202074515U
- Chinese Text and Machine translation of Abstract and Description of CN204704828U
- Chinese Text and Machine translation of Abstract and Description of CN201680390U
- AU2016221799A1 corresponding to the English translation of WO 2016/131787
- Chinese Text and Machine translation of Abstract and Description of CN203431812U
- Chinese Text and Machine translation of Abstract and Description of CN202709094U

## Description

The present invention relates to a method and a system for recycling the white slag used during steel treatments, such as refining processes of steel.

During the refining process of steel it is known of to add a composition (rich in lime) which can be partially recycled/disposed of at the end of the refining process (known as "white slag").

White slag recycling generally takes place by cooling the slag from a temperature close to that of molten steel (about 1500°) at which the slag is in liquid form to a temperature suitable for its recycling in the form of powder/fragments.

The recovery of white slag produced in the ladle in steel processing reduces the use of raw materials such as alkaline deslaggers and simultaneously reduces landfill disposal of unused white slag to the benefit of the environment.

It is also known that a cooling of the white slag through direct contact with water is highly unadvisable since the calcium oxide (main content of lime) tends to form a hydroxide, thus inhibiting the original effectiveness of the lime oxide and thereby preventing its reuse.

In particular, white slag recycling methods are known of based on the process of withering, where white slag is put into an open tubular reactor (or drum) for its indirect cooling, through contact with a wall which is specially sprayed with water on the outside subsequently collected into a suitable tub placed below the reactor.

The main problems encountered in this case are the dispersion and high consumption of water, the poor heat exchange which is concentrated in the upper part of the reactor and which requires a reactor of large dimensions which can also be wetted with relative deterioration in the quality of the material.

A method of recycling white slag placed in an open tubular reactor in which air flows cool the white slag is also known of. However, these air flows, on account of the moisture, may lead to the hydration of the recycled material.

The above problems relative to handling and recycling white slag without direct contact with water (i.e. via indirect cooling) have also been described in the patent document with publication number WO 2016/116884 A1. This document describes a white slag cooling and recycling system in which a rotatable drum is used for indirect cooling of the white slag thanks to a cooling fluid circulating in an interspace made in the mantle of the drum. Document AT 12702 U1 also discloses a white slag cooling and recovery system which uses a rotatable drum.

Unfortunately, in the aforesaid rotatable drum systems, the inner walls of the drum are continuously subjected to stress and wear by the white slag in the cooling phase and may suffer from reduced performance or extensive machine downtime in the case of the drum needing replacement.

The aim of the present invention is to propose a system for cooling and recycling white slag able to make system maintenance quicker and easier and at the same time improving the recycling efficiency of the white slag, reducing recycling times while maintaining high quality standards of the material obtained.

This purpose is achieved by a rotatable drum, by a system and a method for cooling and recycling white slag according to the appended independent claims. The dependent claims describe preferred embodiment variants.

The characteristics and advantages of the present invention will be evident from the description given below, by way of a non-limiting example, according to the appended drawings, wherein:
- figure 1 shows a perspective view of a system for cooling and recycling white slag according to one embodiment of the invention;
- figure 2 shows a side view of the system for cooling and recycling white slag in one embodiment;
- figure 3 is a cross-section view of the system for cooling and recycling white slag along a plane intersecting the rotatable drum and parallel to a generatrix thereof;
- figure 4 is an enlargement of a portion of figure 2;
- figure 5 shows a perspective view of a modular panel according to the present invention, in one embodiment;
- figure 5a shows a transversal cross-section view of the modular panel in figure 5;
- figure 5b shows a plan view of the modular panel in figure 5;
- figure 5c shows a plan view of a modular panel according to the present invention in a further embodiment variant;
- figure 5d shows a perspective view of a modular panel according to the present invention, in an embodiment variant;
- figure 5e shows a detail of a drum according to an embodiment variant of the present invention, in which one of the panels is shown in an exploded view compared to its assembled configuration on the drum;
- figure 6 shows a drum frame suitable to support the modular panels, according to one embodiment of the present invention;
- figure 6a shows a cross-section view of a portion of drum frame according to one embodiment of the present invention near an inner flange of a tubular ring of the frame;
- figure 7 shows a cross-section of a rotating hydraulic joint according to an embodiment of the present invention;
- figure 8 shows a cross-section of rotation means of the rotatable drum according to an embodiment of the present invention;
- figure 9 shows a side view of the loading apparatus of the white slag, showing (for simplicity of illustration, fictitiously superposed) two configurations of the loading apparatus to carry out the unloading step of the residual material not subjected to cooling in the rotatable drum;
- figure 10 shows a front view of the loading apparatus of the white slag, showing (for simplicity of illustration, fictitiously superposed) two configurations of the loading apparatus to carry out the unloading step of the material into a hopper;

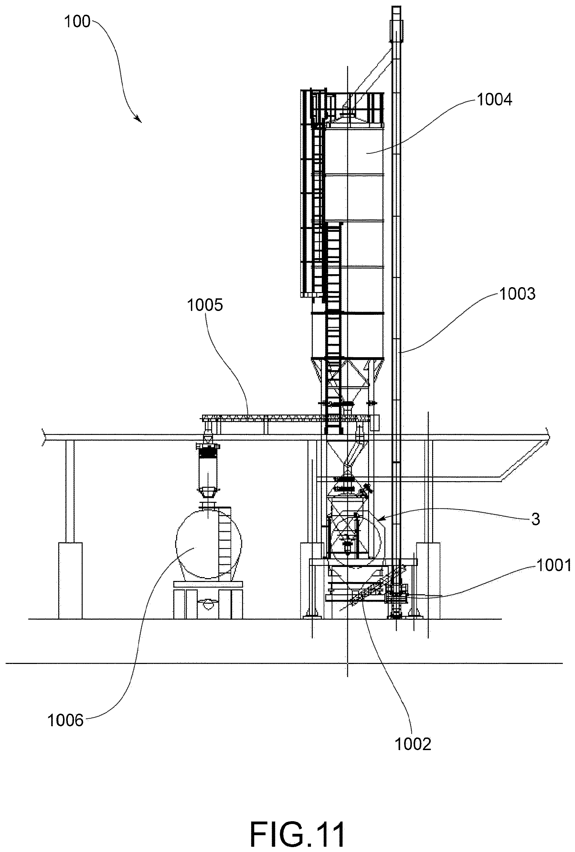

- figure 11 shows a front view of a plant comprising a system for cooling and recycling white slag according to one embodiment of the present invention.

With reference to the appended drawings, reference numeral 1 globally denotes the proposed system for cooling and recycling white slag resulting from a production process of steel. This system 1, comprises a loading apparatus 2 of the white slag (comprising for example a loading hopper 21) in which the white slag is loaded, preferably by lifting means 23.

In addition, the system 1 comprises a rotatable drum 3 suitable to receive inside it the white slag from the loading apparatus 2. Such rotatable drum 3 comprises a cooling segment 31 suitable to cool the white slag to induce a withering process of the white slag, and a screening segment 32, placed downstream of the cooling segment 31. The selection and separation of fragments and powder of the white slag having a piece size smaller than a predetermined piece size is performed in the screening segment 32.

Feeding means 4 of the white slag configured to convey the white slag from the loading apparatus 2 to the cooling segment 31 of the rotatable drum 3 by conveying it through an inlet mouth 380 of the drum. Said feeding means preferably comprise a vibrating channel 400, for example subjected to vibration by means of eccentric or magnetic masses. Preferably, moreover, the vibrating channel 400 is supported in a suspended manner from the receiving means 2 by means of springs.

Preferably, the loading apparatus 2 comprises a hopper 21, preferably provided peripherally with an interspace 210 affected by a cooling fluid F, so as to allow a first cooling of the white slag before its input into the cooling segment 31 of the rotatable drum 3.

Preferably, the interspace 210 is made in a double peripheral wall of the hopper 21 and comprises internal passages in a "serpentine" shape (e.g. a series of pipes inserted in the interspace or made in the double wall).

On the hopper 21, suitable to be loaded with hot white slag, a grille 22 is installed having a mesh suitable to prevent the entrance into the rotatable drum 3 of a material with dimensions such as to cause complications and damage.

On the hopper, grille movement means 210 are also installed suitable to impose a rotation on the grille in order to tip the residual material on the grille (i.e. the material having dimensions such as not to cross it) outside the hopper 21.

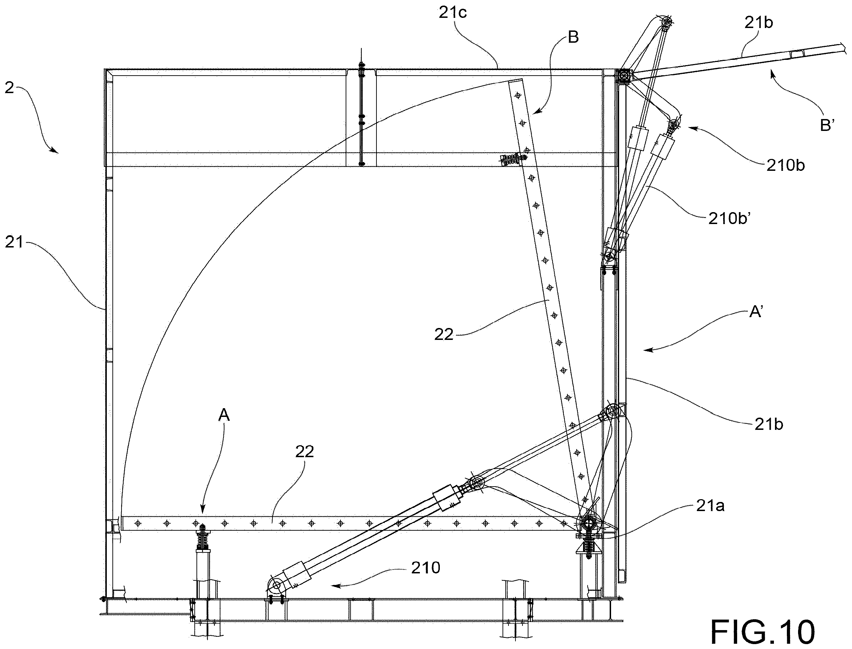

In the embodiment illustrated in figure 10 the grille is hinged on one side 21a of the grille around which it carries out the rotation.

Preferably, the movement means of the grille comprise a hydraulic piston suitable to impose a rotation on the grille 22, for example bringing the grille from a horizontal position, substantially parallel to the support surface of the hopper 21 to a nearly vertical position, that is almost parallel to a vertical hopper wall (e.g. as shown in figure 10).

Figure 10 shows two positions of the grille 22 in the loading and receipt phase of the material A and in the tipping phase B for unloading the material.

The hopper 21, on the unloading side of residual material on the grille, comprises a movable outer wall 21b suitable to be moved so as to open, to allow the unloading of the residual material on the grille.

Preferably, the movable outer wall 21b is hinged to a fixed hopper wall 21c and is rotatable from a closed position A' of the hopper (vertical wall) to an open position B' of the hopper (substantially horizontal wall).

The movable outer wall 21b is driven in rotation by wall movement means 210b. Preferably, said rotation means comprise a hydraulic piston 210b' suitable to impose a rotation on the wall 21b, for example as shown in figure 10.

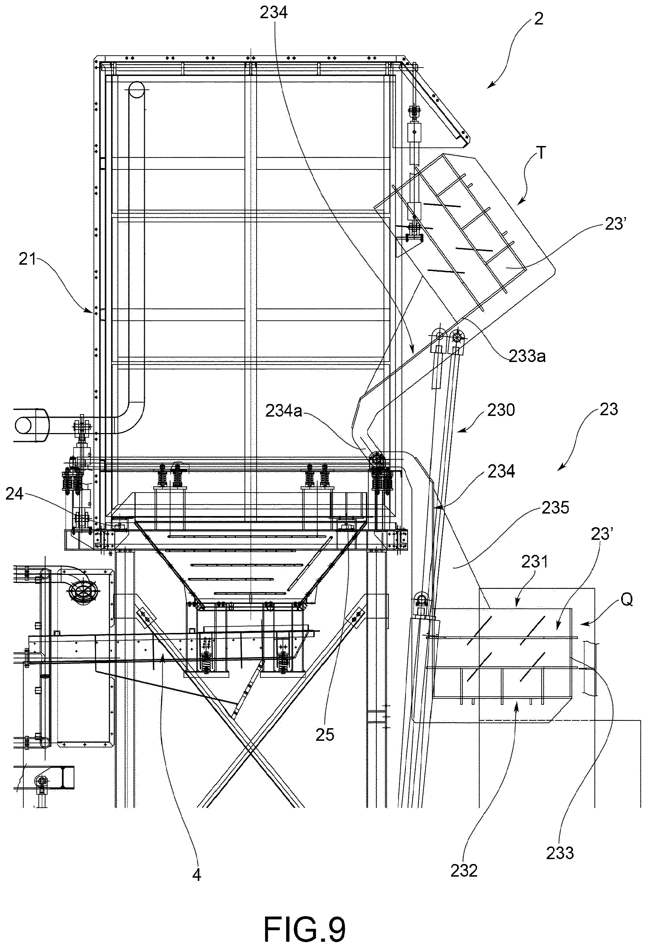

In one embodiment, for example shown in figure 9, the lifting means 23 comprise a bin 23', rotatably secured to the hopper 21, suitable to receive the material (the white slag) from a means of transport of the slag (for example a loader) and suitable to be moved in rotation to unload the material received inside the hopper 21 onto the grille 22.

Movement means 230 of the bin (for example, a hydraulic cylinder) are operatively connected to the bin so as to move the bin from a horizontal position Q in which it receives the material to be unloaded to an unloading position T of the material into the hopper 21.

In one embodiment, the bin 23' is provided with a bottom wall 232 and side walls defining a receiving opening 231 of the material inside the bin 23'. In addition, one 233a of the side walls 233 comprises an extension 234 suitable to act as an unloading chute to guide the material into the hopper, when the bin is in the unloading configuration T.

In addition, preferably, said extension 234 comprises an extension portion 234a rotatably attached to the hopper 21.

In addition, containment walls 235 are installed on the extension 234 that protrude from the extension 234 so as to contain the spillage of material during the unloading phase into the hopper 21.

Furthermore, the system 1 comprises:
- first unloading means 5, operatively associated (for example connected) to the screening segment 32, for the extraction of fragments and powder of white slag having an average piece size smaller than a predetermined piece size;
- second unloading means 6, operatively associated to the screening segment 32, for the extraction of fragments and powder having an average piece size bigger than a predetermined piece size.

The screening segment 32 preferably comprises a rotating screen 321 integral in rotation with the drum 3 and consisting of a steel mesh suitable to allow the transit of fragments and powder of the white slag having a piece size smaller than a predetermined piece size, suitable to be unloaded by the first unloading means 5 (such as an unloading hopper as illustrated in the appended drawings). The remaining amount of material having a piece size greater than said predetermined piece size (i.e. the material not withered and pulverized, generally consisting of metal crusts) continues its path and is expelled by the second unloading means 6 (for example a chute 61).

The rotatable drum 3 comprises a drum frame 33 and modular panels (for example 16 modular panels indicated by reference numerals 35 to 50 in the appended drawings) removably fixed to the drum frame 33 and forming the side walls of said rotatable drum 3, when fixed to the frame.

Each of said modular panels comprises panel walls 360 that internally contain at least one chamber 361 suitable to be permeated by a cooling fluid F, to obtain an indirect cooling of the white slag when received in the first segment 31 of the drum 3 by means of thermal exchange between said white slag and the panel walls 360. The chamber of each of said modulator panels is placed in fluidic communication with the chamber of another of said modular panels.

Thanks to the presence of the cooled panels, in the first segment 31 a controlled cooling therefore occurs which leads to a withering process of the white slag with consequent detachment of fragments and powder. Subsequently, in the second segment 32, the selection and separation of the fragments and powder of the white slag takes place.

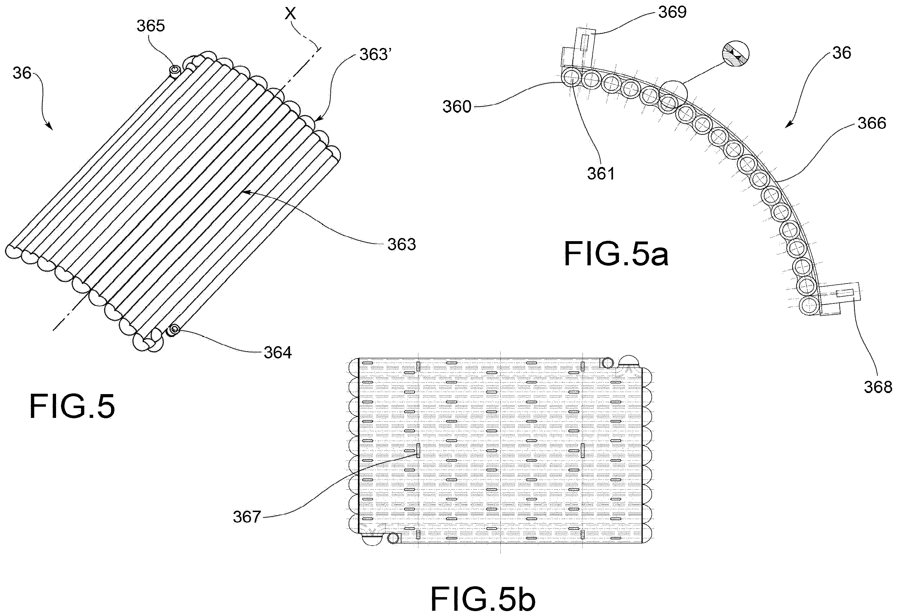

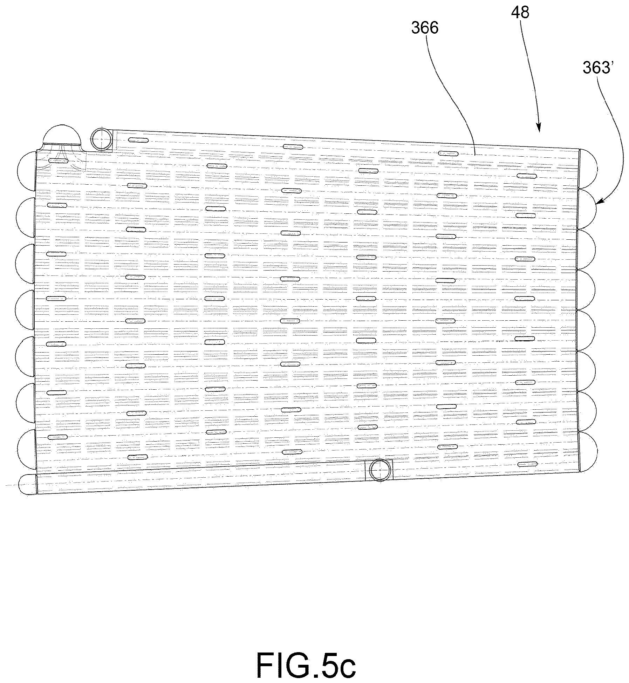

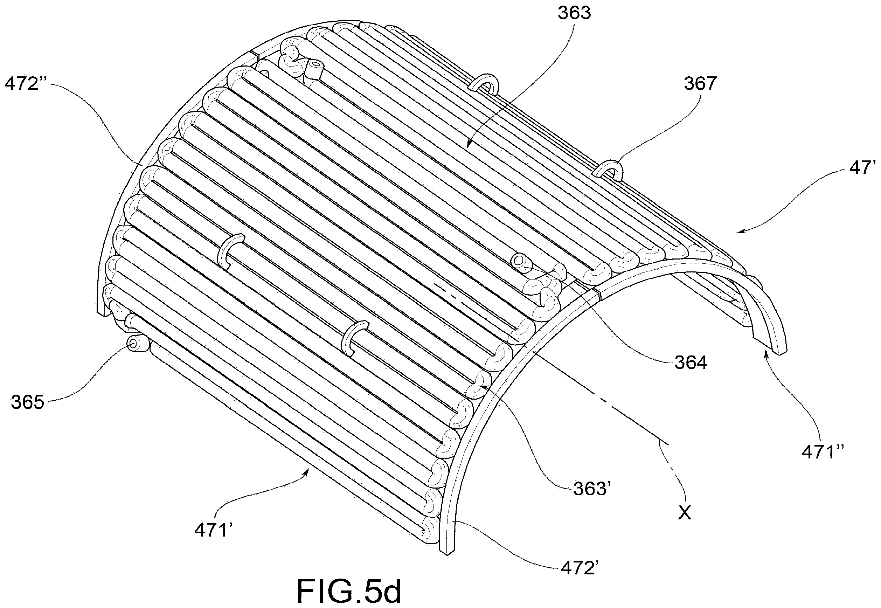

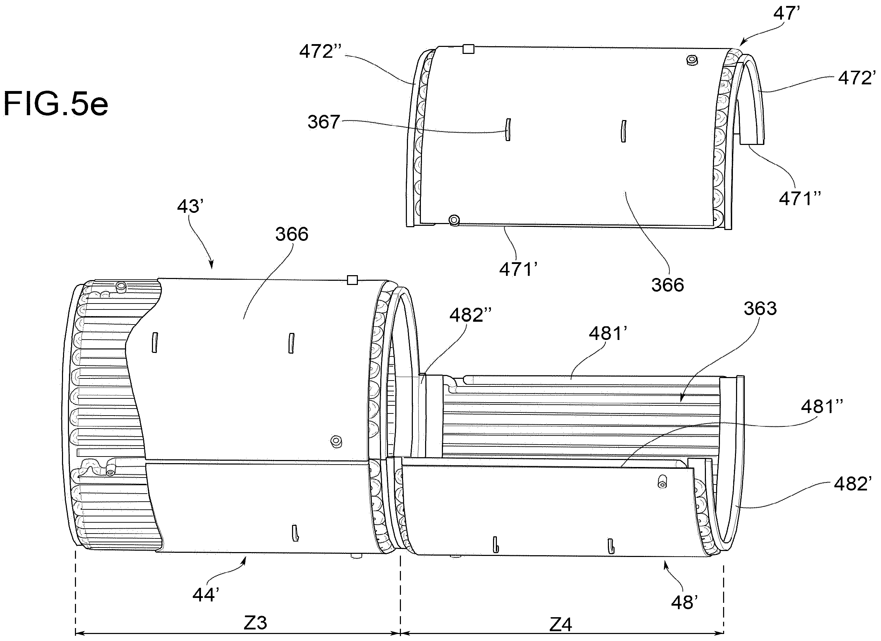

In a particularly advantageous embodiment, each modular panel comprises an inlet mouth 364, an outlet mouth 365 and a plurality of pipes 363 side by side and in fluid communication with each other and with the aforesaid mouths 364 and 365. Preferably, the pipes 363 are arranged in a serpentine and are joined to each other along their outer side surfaces so as to form the modular panel. In other words, as shown in figures 5 to 5e, each modular panel is formed by a plurality of pipes which extend along a preferential direction X and are arranged side by side and parallel to each other and connected at their ends 363' to form a serpentine having a single inlet mouth 364 and a single outlet mouth. It is clear that in this embodiment the above-mentioned panel walls 360 are formed at least partially by the side walls of the plurality of pipes joined to each other, just as the chamber 361 suitable to be permeated by a cooling fluid F is constituted at least partially by the plurality of internal cavities of the pipes 363 placed in fluidic communication with each other.

Given the configuration of the pipes, the cooling fluid F that circulates in the pipes of the modular panels mainly follows paths parallel to the axis of rotation of the rotatable drum. In addition, in particular, panel pipes adjacent to each other allow the circulation of the cooling fluid F in opposite directions (serpentine).

Preferably, the plurality of pipes 363 of each panel is fixed to a supporting wall 366 that covers the plurality of pipes 363 like a mantle and is suitable to be arranged externally with respect to the internal compartment of the rotatable drum 3 which receives the white slag. In other words, preferably, the support wall 366 covers the plurality of pipes 363 only on the side facing the outside of the rotatable drum 3, i.e. on the convex side of the modular panel.

Preferably, the inner surface of the rotatable drum suitable to come into contact with the white slag to carry out the heat exchange is at least partially composed of all the side surfaces of the pipes of all the modular panels (with reference numbers 35 to 50) fixed to the drum frame 33. This allows an increased heat exchange surface to be obtained compared to a smooth surface.

Preferably, any gaps present between the panels or between the panels and the drum frame are filled with refractory mortar.

Preferably, the modular panels have a concave shape, with the concavity suitable to face towards the inside of the rotatable drum 3.

In a preferred embodiment, the drum frame comprises supply means of the cooling fluid F from a feed system 70 of the cooling fluid F towards the modular panels. Preferably, said supply means comprise delivery pipes 333 which constitute at least partially or entirely the drum frame 33 itself.

The delivery pipes form a supply circuit of the cooling fluid F in a direction that proceeds in the opposite direction Y' to the advancement direction of the white slag Y inside the rotatable drum 3.

More in particular the delivery pipes 333 are configured so as to form a cage arranged around the rotatable drum 3 and act as a support frame of the modular panels.

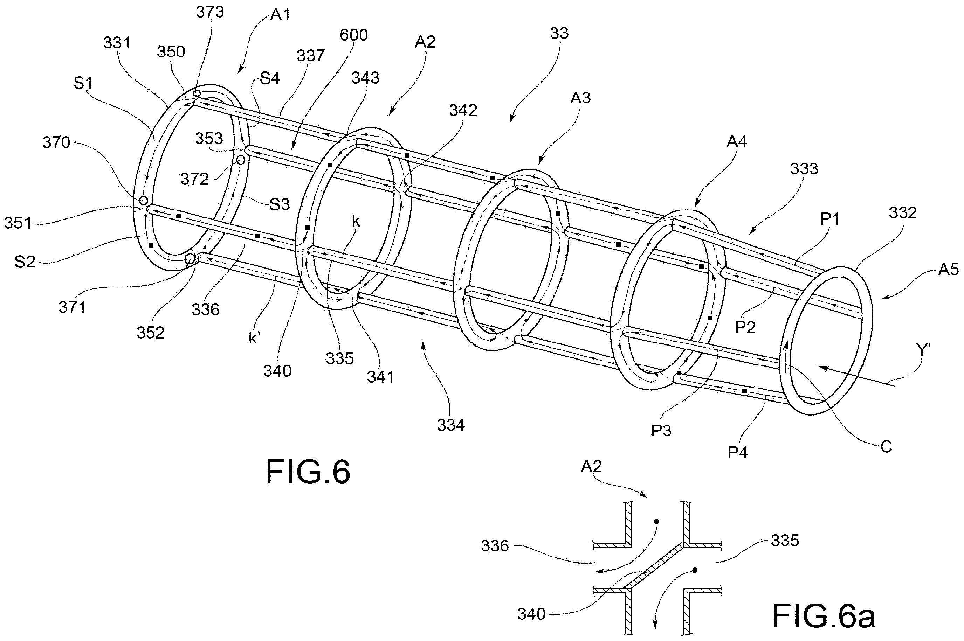

As shown in figure 6, the cage preferably comprises tubular rings A1, A2, A3, A4, A5 (for example 5 tubular rings) arranged parallel to each other in a spaced apart manner along the direction of advancement Y of the white slag, so that a first head ring A1 is positioned in the vicinity of a white slag inlet mouth 380 in the rotatable drum and a last tail ring A5 is positioned in proximity of the screening segment 32.

Each tubular ring A1, A2, A3, A4, A5 is placed in fluidic communication with one or two adjacent tubular rings by means of junction ducts 334, preferably rectilinear, arranged in a spaced apart manner along the circumferential direction of the tubular rings and branching off from these in a direction substantially parallel to the advancement direction Y of the white slag.

In other words, the drum frame 33 is a substantially cylindrical cage of pipes, in which the generatrixes of the cylinder are formed by the junction ducts 334 which place in fluidic communication the tubular rings A1, A2, A3, A4, A5 arranged on parallel planes spaced apart along the entire elevation of the cylinder.

Advantageously, the tubular rings A1, A2, A3, A4 comprise a plurality of flanges 340, 341, 342, 343 suitable for conveying the cooling fluid F along supply paths, P1, P2, P3, P4 of the cooling fluid F from the tail ring A5 towards the head ring A1. Such supply paths are preferably wound in a spiral shape (as shown in Figure 6).

In particular, the aforesaid flanges 340, 341, 342, 343 together with the tubular rings A1, A2, A3, A4 and the junction ducts 334 form supply paths P1, P2, P3, P4 independent of each other, without any mixing of the cooling fluid F occurring between one path and the other. This allows a uniform distribution of the temperature of the cooling fluid F to be obtained inside the entire drum frame 33.

In the embodiment shown in figure 6, each tubular ring A1, A2, A3, A4 comprises flanges which deflect the path of the cooling fluid F.

Each of these flanges 340, 341, 342, 343 is arranged inside each tubular ring A1, A2, A3, A4 in such a way as to form a septum suitable to divert the cooling fluid F coming from the tubular ring A1, A2, A3, A4 outside said ring towards one of the junction ducts 334. In addition, said flange is suitable to divert the cooling fluid F coming from a junction duct located upstream of the tubular ring in the direction of advancement of the cooling fluid, inside said tubular ring.

For simplicity of representation, figure 6a shows a cross-section of a tubular ring A2 of an upstream junction duct 335, of a downstream junction duct 336 and of the flange 340. The direction of the arrows shown indicates the direction of cooling fluid in input and in output from the tubular ring 340, as described above.

Such a configuration of the flanges inside the tubular rings leads to a circulation of the cooling fluid F within the drum frame 33 so that, for each supply path P1, P2, P3, P4, the cooling fluid enters a tubular ring coming from a predetermined input direction K and comes out of the tubular ring along an output direction K' distinct from and parallel to the input direction K.

Preferably, the rotatable drum 3 (and thus the drum frame 33) is tapered in the vicinity of the screening segment 32, so as to assume a conical shape.

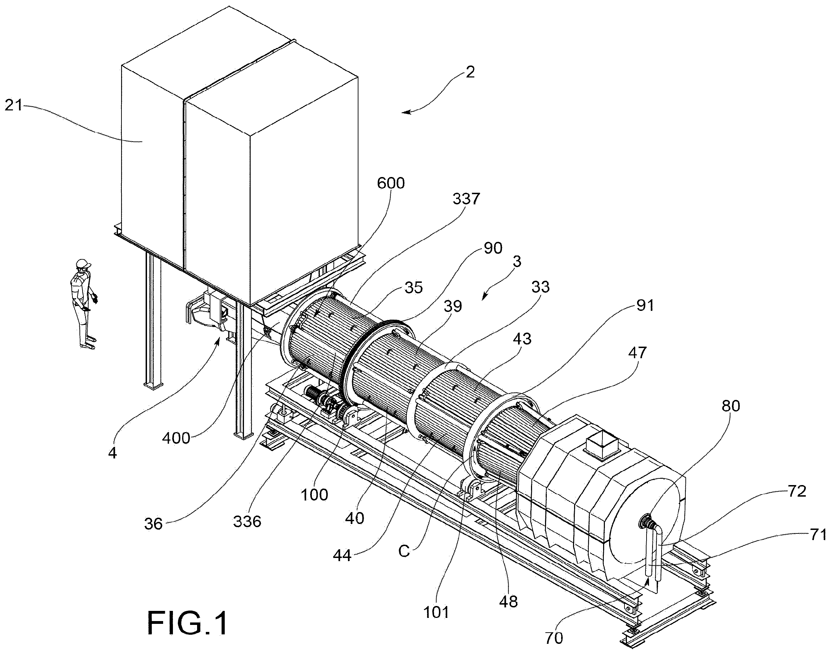

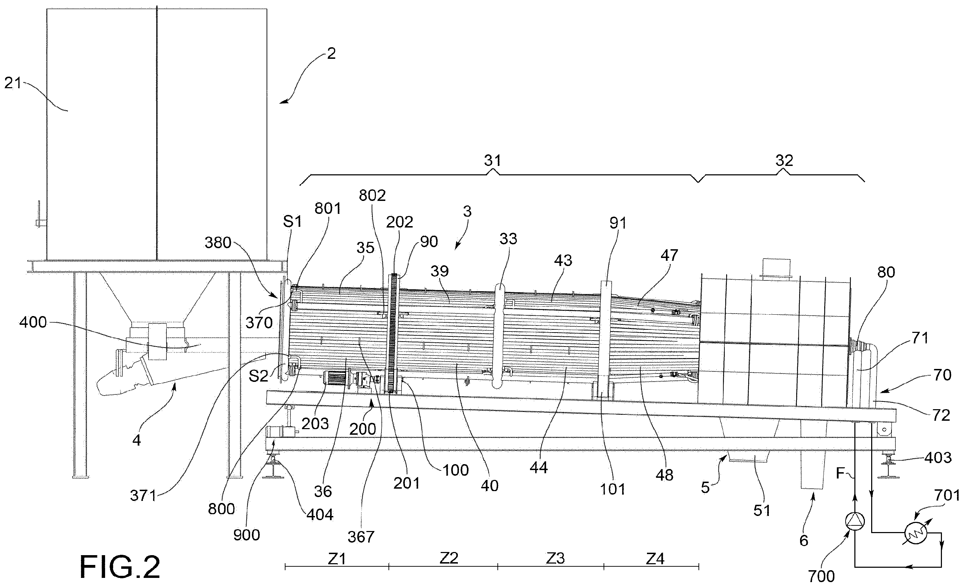

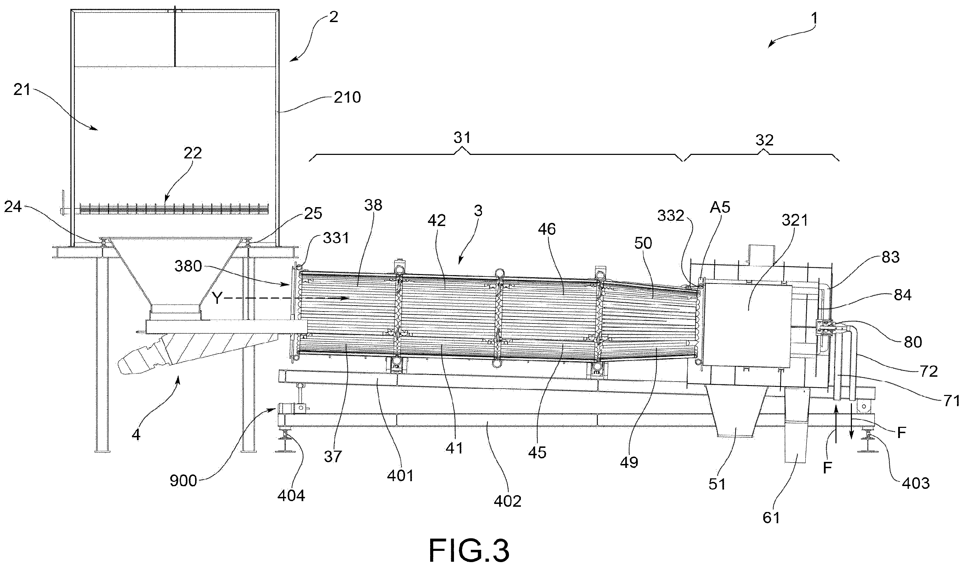

Figures 1, 2, 3 and 6 show a preferred embodiment of the drum frame 33 comprising four zones Z1, Z2, Z3, Z4, in which, proceeding in the direction of advancement of the white slag, the first three zones are substantially cylindrical in shape and the last zone Z4 is a frustoconical shape.

In this embodiment, the rotating screen 321 is fixed on the tail ring A5.

The modular panels 35, 36, 37, 38, 39, 40, 41, 42, 43, 44, 45, 46, 47, 48, 49, 50, are fixed to the drum frame 33 by means of suitable removable attachment means, for example by means of keys inserted in holes made on respective flanges fixed on the panel 368, 369 and on the frame.

Preferably, lifting hooks 367 are fixed to the modular panels for lifting the panels by means of panel lifting means (such as a hoist). This makes it possible to remove the panels safely and easily for their replacement.

Each zone Z1, Z2, Z3, Z4 of the frame is defined as a space between two adjacent tubular rings. On each zone z1, z2, z3, z4 a plurality of modular panels is fixed suitable to form the entire side wall of the rotatable drum in correspondence with this area. In other words, in each zone the modular panels are arranged in a side by side manner along the circumferential direction C of the tubular rings and preferably occupy the interspace 600 between two junction ducts 336, 337 spaced from each other along the circumferential direction C.

In an advantageous embodiment variant of the panels (and of the drum), for example shown in figures 5d and 5e, each modular panel is shaped according to a substantially semi-cylindrical or semi-frustoconical shape. In this variant, a pair of modular panels 47', 48'; 43', 44' is fixed on each zone z1, z2, z3, z4 suitable to form the entire side wall of the rotatable drum in correspondence with each zone z4, z3. This makes it possible to minimize as far as eliminating the gaps present between the panels and the drum frame, avoiding the need to fill such gaps with refractory mortar. In this embodiment variant each panel is joined to the adjacent panel both along the side wall edges 471', 471'', 481', 481'', of the panel, and along the edges of an upper half-base 472', 482' of the panel and/or along the edges of the other lower half-base 472", 482" of the panel. Preferably, the modular panels are joined together by welding, for example so as to fill any remaining gaps between panels.

In this embodiment variant, the joining of the panels makes it possible to obtain a drum substantially free of gaps, thus minimizing the need to use refractory mortar and, therefore, reducing assembly and maintenance times of the drum, as well as the risks of detachment of the refractory mortar.

Once the cooling fluid F, starting from the feeding means through the drum frame 33, has reached the head ring A1 (i.e. the ring positioned in the vicinity of the inlet mouth of the white slag), it proceeds to cross the chambers of the modular panels in the direction of advancement of the white slag in the rotatable drum. The chambers 361 of the modular panels are placed in fluidic communication with each other by means of connection hoses 800, 801, 802, preferably flexible.

In particular, the tubular head ring A1 (as well as the other tubular rings A2, A3, A4) is internally divided into ring segments by the flanges 350, 351, 352, 353. Thanks to the presence of the flanges, which create separation septa, the ring segments (four segments S1, S2, S3, S4 in figure 6) do not communicate with each other and each segment receives the cooling fluid from a single supply path P1, P2, P3, P4 described above. On each ring segment S1, S2, S3, S4 a respective outlet opening 370, 371, 372, 373 is made suitable to be connected by means of a connection hose 800, 801, preferably flexible, with the respective adjacent modular panel 35, 36, 37, 38.

The fluidic communication between the panels of the first zone Z1, placed in proximity with the inlet mouth of the white slag in the rotatable drum 3 (tubular ring A1), and the panels of the second zone Z2, located downstream, is realized by means of further connection hoses 802, preferably flexible.

The modular panels are placed in fluidic communication with each other preferably by means of flexible connection hoses that connect the outlet mouth 365 of a first modular panel 36 with the inlet mouth 364 of an adjacent modular panel, preferably an adjacent modular panel belonging to an adjacent zone Z2 located downstream of the zone Z1 downstream of the first modular panel 36.

In one embodiment, the feeding means of the cooling fluid F comprise fixed delivery 71 and drainage 72 pipes connected to a rotating hydraulic joint 80. Through the rotating hydraulic joint 80, the fixed delivery pipes 71 are fluidly connected to the delivery pipes 333 of the frame 3, while the fixed drainage pipes 72 are fluidly connected to the chamber 361 of the modular panels and receive the cooling fluid once it has passed through all the modular panels.

The feeding means 70 of cooling fluid F also comprise pumping means 700 suitable to allow the circulation of the cooling fluid F in the modular panels and cooling means 701 suitable to cool the cooling fluid coming from the rotatable drum 2 (through the drainage pipes 72).

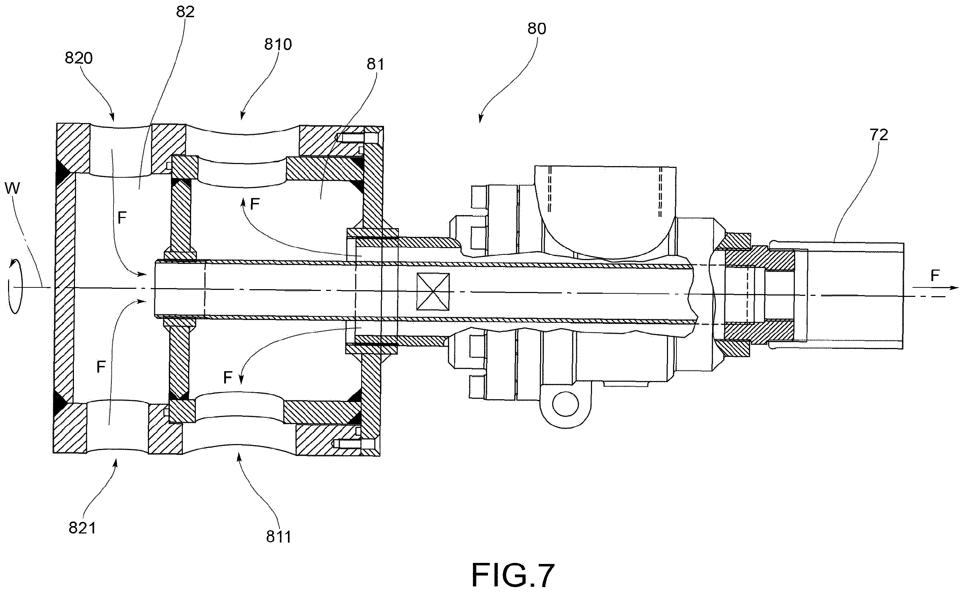

One embodiment of the rotating hydraulic joint is shown in cross-section in figure 7.

The rotating hydraulic joint 80 is suitable to rotate around an axis of rotation W, preferably coinciding with the axis of rotation of the rotatable drum 3. The rotating hydraulic joint 80 comprises a feed chamber 81 having one or more outlet mouths 810, 811 from which feed pipes 83 branch off rotating integrally with the drum frame 33 and connected to it, preferably to the tail ring A5. A drainage chamber 82 is made in the hydraulic joint 80 and is adjacent to the feed chamber 81, but not communicating therewith. The drainage chamber 82 is provided with one or more inlet mouths 820, 821 through which the coolant fluid enters coming from the modular panels, through drainage pipes 84 rotating integrally with the drum frame 33.

As already described above, the cooling segment 31 and the screening segment 32 are fixed to each other so as to form a single rigid rotating body.

The entire drum 3 is rotatably supported by one or more rings 90, 91 which rotate integrally with the rotatable drum on support rollers 100, 101.

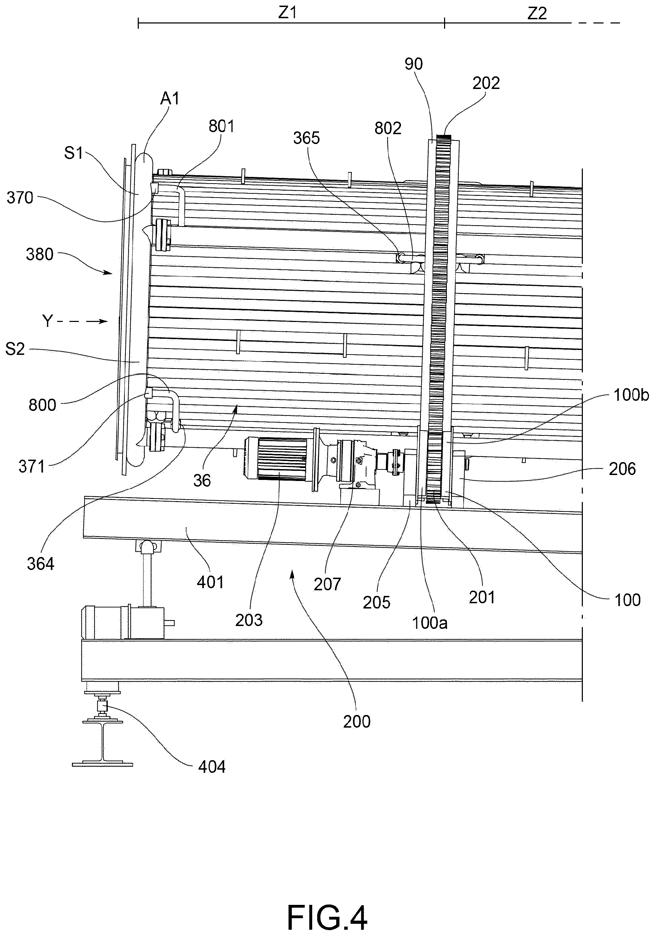

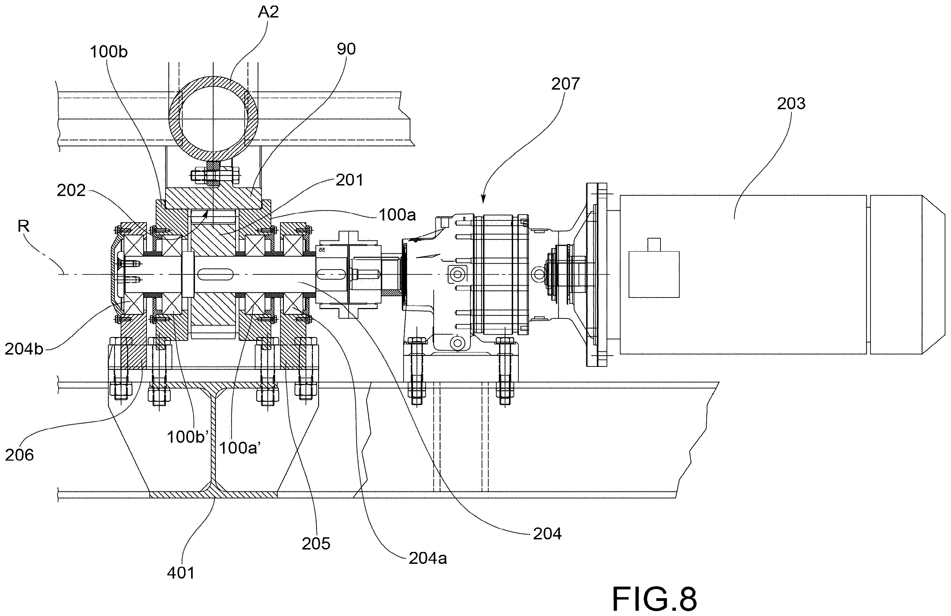

The actuation of the rotation of the rotatable drum 3 is realized by means of rotation actuating means 200 suitable to rotate the drum 3 by means of a pinion 201 - crown 202 system (shown for example in figure 8 and in figure 4).

In a preferred embodiment said rotation actuating means 200 comprise a motor (e.g. an electric motor) suitable to place the pinion 201 in rotation by means of a drive shaft 204. The pinion 201 in turn places in rotation a crown 202 fixed around the rotatable drum 3, preferably around a tubular ring A2 of the frame 33.

Preferably, the weight of the rotatable drum is supported by supporting rollers 100, 101 and not by the pinion 201. In particular, the supporting roller 100 at the pinion 201 is composed of two independent rotating discs 100a, 100b, arranged at the sides of the pinion 201, supported in a rotating manner by respective bearings 100a', 100b' mounted on the drive shaft 204. Said independent rotating discs 100a, 100b, are thus rotatable around an engine rotation axis R coinciding with the axis of rotation of the motor 203 and of the pinion 201. In addition, said rotating discs 100a, 100b rotate independently with respect to the drive shaft 204, and, therefore, the pinion 201. The drive shaft is in turn rotatably supported by a further pair of bearings 204a, 204b, in turn supported by a respective support element 205, 206 attached to a pivoting frame 401 which supports the entire weight of the rotatable drum 3.

Between the motor 203 and the drive shaft 204 a geared motor 207 is preferably positioned.

Preferably, the tilting frame 401 is hinged in the vicinity of the screening segment 32 in such a way as to allow the progressive lifting of the drum 3 on the side of the inlet mouth of the white slag with consequent inclination of the axis of rotation of said rotatable drum 3. Preferably, the system according to the present invention comprises electromechanical jacks 900, connected between the tilting frame 401 and a base frame 402 on which such tilting frame 401 is hinged. The base frame 402 is preferably placed parallel to the support surface which the entire system 1 rests on.

The variation of the inclination and the rotation speed of the rotatable drum 3 determine how long the white slag stays inside said drum 3.

Additionally, in a preferred embodiment, below the screening segment 32, on the unloading means 5 of the white slag a white slag temperature detector is installed (preferably an infrared detector).

In addition, in one embodiment, at least one drum load cell 403, 404 suitable to detect the weight of the material contained in the rotatable drum 3 is installed under the rotatable drum.

Preferably the system 1 further comprises a programmable control device (e.g. PLC based) suitable to send control signals to the electromechanical jacks so as to adjust the inclination of the rotatable drum 3 as a function of the white slag temperature detected in the unloading means and/or as a function of the weight of material contained in the rotatable drum detected by the load cell 403, 404. Advantageously, this allows a feedback control of the cooling process and advancement of the material inside the rotatable drum. For example, in the case of detection of an excessively high temperature of the white slag unloaded, the programmable control device generates a suitable signal to reduce the inclination of the rotatable drum so as to slow down the advancement of the white slag in the drum and thus increase the length of the heat exchange, with a consequent reduction of the temperature of the slag unloaded.

In a preferred embodiment, the loading apparatus 2 also comprises load detection sensors suitable to detect the amount of material loaded in the loading apparatus. Preferably, the detection sensors of the amount of material loaded comprise load cells 24, 25, installed on the hopper 21 and suitable to detect the weight of the material contained in the hopper 21.

Preferably, the programmable control device is configured to manage the loading and unloading of the white slag as a function of the amount of material loaded in the hopper detected by the load detection sensors and the amount of white slag present inside the rotatable drum detected by the drum load cells 403, 404.

The system 1 described so far is preferably installed in a plant 1000 for recycling white slag, which is also an object of the present invention.

The system 1000 further comprises a conveyor belt 1001 suitable to receive the white slag coming from the first unloading means 5 preferably by means of a rotary auger 1002.

A bucket elevator 1003 is suitable for transporting the white slag from the conveyor belt to a storage silo 1004. The white slag stored in the storage silo 1004 can then be reused by means of appropriate dosage and mixing with new lime or it can be transported by means of a second rotary auger 1005 to a truck 1006 for transport to a steel production plant or for disposal.

The present invention also relates to a method for cooling and recycling white slag resulting from a production process of steel. The steps of the above method can be easily inferred by a person skilled in the art on the basis of the above description of the entire system.

In particular, the method comprises the steps of:
- storing the white slag in the loading apparatus 2;
- feeding an adjustable flow of white slag from the loading apparatus 2 inside the rotatable drum 3;
- controlled cooling of the white slag contained inside the rotatable drum 3 by indirect thermal exchange with a cooling fluid that affects an internal chamber 361 made of modular panels removably fixed to the frame of the rotatable drum 3, said controlled cooling being suitable to lead to a withering process of the white slag with consequent detachment of fragments and powder;
- selecting and separating such fragments and powder of white slag having a piece size smaller than a predetermined piece size.

As described above the method preferably comprises the step of adjusting the inclination of the rotatable drum 3 as a function of the temperature of the white slag and/or as a function of the weight of the material contained in the rotatable drum 3.

Additionally, in an advantageous embodiment, the method comprises the step of managing the loading and unloading of the white slag as a function of the amount of material loaded in a hopper of a loading apparatus and the amount of white slag present inside the rotatable drum, said amounts being preferably detected by load cells 403, 404.

Innovatively, the system for cooling and recycling white slag according to the present invention, thanks to the presence of replaceable modular panels, is able to make system maintenance faster and easier.

In the case of wear of the inner walls of the panels in contact with the white slag, it is possible to replace the panels in a simple manner, avoiding prolonged downtime and reducing costs due to replacement of the entire rotatable drum.

In addition, the system according to the present invention, thanks to the optimized circulation of fluid inside the drum frame and then in each of the modular panels, improves the heat exchange with the white slag and, consequently, the recycling efficiency of the white slag, reducing the time of the recycling cycle and at the same time maintaining high quality standards of the material obtained.

Advantageously, thanks to the presence of a temperature detection sensor of the white slag and automated inclination means of the rotatable drum, the proposed system is also able to optimally manage the heat exchange during the cooling phase of the white slag, allowing energy savings and, therefore, a greater production efficiency of the white slag.

Additionally, the present system makes it possible to obtain optimized heat exchange thanks to:

a spiral circulation of the cooling fluid inside the drum frame 33 in the direction opposite to the direction of advancement of the white slag in the drum;

a simultaneous circulation of the cooling fluid F in the pipes of the modular panels both in the direction opposite to the direction of advancement of the white slag and in the same direction, in an alternating manner;

an increased heat exchange surface with the white slag, thanks to the presence of the piping of the panels.

A reduction of the amount of cooling fluid in circulation needed for cooling (in terms of flow rate) ensues.

The proposed system preferably uses fluid in a closed circuit, for example, industrial water, as a coolant.

Preferably, the present system operates in an intermittent mode (batch "mode"), so as to unload a certain amount of white slag at a time from the unloading means, and subsequently load an adequate load of material in the loading apparatus, as a function of the material unloaded. However, it can also be used in continuous, thanks to the possibility of monitoring, moment by moment, the amount of material present in the rotatable drum and the amount of material present in the loading hopper.

Advantageously, inside the rotatable drum the white slag is continuously moved and tilted, thus presenting itself always in renewed contact with the exchange surface of the modular panels and favouring the immediate detachment and separation of the powder produced from the rest of the material, with the advantage of a rapid and complete cooling of all the slag to be treated.

## Claims

1. Rotatable drum (3), suitable to receive white slag inside it resulting from a steel production process, **characterized in that** said rotatable drum (3) comprises:
- a drum frame (33);
- modular panels (35, 36, 37, 38, 39, 40, 41, 42, 43, 44, 45, 46, 47, 48, 49, 50) removably fixed to said drum frame (33) and forming the side walls of said rotatable drum (3) when fixed to the frame (33),
each of said modular panels comprising panel walls (360) that internally contain at least one chamber (361) suitable to be permeated by a coolant fluid (F), to obtain an indirect cooling of the white slag when received in the drum (3) by means of thermal exchange between said white slag and the panel walls (360),
wherein the chamber (361) of each of said modular panels (35, 36, 37, 38, 39, 40, 41, 42, 43, 44, 45, 46, 47, 48, 49, 50) is placed in fluidic communication with the chamber of another of said modular panels (35, 36, 37, 38, 39, 40, 41, 42, 43, 44, 45, 46, 47, 48, 49, 50).

2. Rotatable drum (3) according to claim 1, wherein each of said modular panels comprises a plurality of pipes (363) placed side by side and arranged in a serpentine in fluidic communication with each other.

3. Rotatable drum (3) according to claim 2, wherein the panel walls (360) are constituted at least partially by the side walls of the plurality of pipes (363) joined together and wherein the chamber (361) is constituted at least partially by the plurality of internal cavities of the pipes (363) in fluidic communication with each other.

4. Rotatable drum (3) according to claim 2 or 3, wherein the plurality of pipes (363) of each panel is fixed to a support wall (366) that covers the plurality of pipes (363) like a mantle.

5. Rotatable drum (3) according to any of the preceding claims, wherein the drum frame (33) comprises supply means of the cooling fluid (F) from a feeding system (70) of the cooling fluid (F) towards the modular panels, wherein said supply means comprise delivery pipes (333) that constitute at least partially or totally the drum frame (33) itself.

6. Rotatable drum (3) according to claim 5, wherein the delivery pipes (333) are configured so as to form a cage disposed around the rotatable drum (3) and that serves as a support frame of the modular panels.

7. Rotatable drum (3) according to any of the preceding claims, wherein each of said modular panels is shaped according to a substantially semi-cylindrical or semi-frustoconical shape.

8. Rotatable drum (3) according to claim 6 or 7 when dependent on claim 6, wherein the cage comprises tubular rings (A1, A2, A3, A4, A5) arranged parallel to each other in a spaced apart manner along the direction of advancement (Y) of the white slag, so that a first head ring (A1) is positioned in the vicinity of a white slag inlet mouth (380) in the rotatable drum (3) and a last tail ring (A5) is positioned in proximity of the screening segment (32),
each tubular ring (A1, A2, A3, A4, A5) being placed in fluidic communication with one or two adjacent tubular rings by means of junction ducts (334), preferably rectilinear, arranged in a spaced apart manner along the circumferential direction (C) of the tubular rings and that branch off from said tubular rings along a direction substantially parallel to the advancement direction (Y) of the white slag.

9. System (1) for cooling and recycling white slag resulting from a production process of steel, comprising:
- a loading apparatus (2) of the white slag, suitable to receive the white slag;
- a rotatable drum (3) according to any of the claims from 1 to 8 suitable to receive inside it the white slag coming from the loading apparatus (2), said rotatable drum (3) comprising a cooling segment (31) suitable to cool the white slag to induce a process of withering of the white slag, and a screening segment (32), placed downstream of the cooling segment (31), wherein the selection and separation of fragments and powder of the white slag having a piece size smaller than a predetermined piece size is performed;
- feeding means (4) of the white slag configured to convey the white slag from the loading apparatus (2) to the cooling segment (31) of the rotatable drum (3);
- first unloading means (5), operatively associated to the screening segment (32), for the extraction of fragments and powder of white slag having an average piece size smaller than a predetermined piece size;
- second unloading means (6), operatively associated to the screening segment (32), for the extraction of fragments and powder having an average piece size bigger than a predetermined piece size;
wherein the indirect cooling of the white slag is obtained when the white slag is received in the cooling segment (31) of the drum (3).

10. System (1) according to claim 9, wherein the loading apparatus (2) comprises:
- a hopper (21),
- a grille (22) installed on the hopper (21),
- grille movement means (210) suitable to impose a rotation on the grille so as to overturn the residual material on the grille outside the hopper (21),
wherein said hopper (21) comprises, on the side of the unloading of residual material on the grille, an external movable wall (21b), suitable to be moved so as to open to allow the unloading of the residual material on the grille.

11. System (1) according to claim 9 or 10, comprising rotation actuation means (200) suitable to place the drum (3) in rotation by means of a pinion (201) and crown (202) system, said crown (202) being fixed around the rotatable drum (3), preferably around a tubular ring (A2) of the frame (33).

12. System (1) according to claim 11, wherein the drum (3) is supported in a rotatable manner by one or more rings (90, 91) that rotate integrally with the rotatable drum on support rollers (100, 101), suitable to support the weight of the rotatable drum, so as to prevent said weight of the rotatable drum being supported by the pinion (201).

13. System (1) according to claim 12, wherein the support roller (100), in correspondence of the pinion (201), is composed of two independent rotating discs (100a, 100b), arranged at the sides of the pinion (201), rotatably supported by respective bearings (100a', 100b') mounted on a motor shaft (204), said independent rotating discs (100a, 100b), being rotatable around a motor rotation axis (R) coincident with the rotation axis of the motor (203) and of the pinion (201) and independently with respect to the motor shaft (204) and the pinion (201).

14. System (1) according to any of the claims from 9 to 13, comprising at least one drum load cell (403, 404), suitable to detect the weight of the material contained in the rotatable drum (3).

15. System (1) according to claim 14, comprising a white slag temperature detector, installed on the unloading means (5), a programmable control device and electromechanical jacks, said programmable control device being suitable to send control signals to the electromechanical jacks so as to adjust the inclination of the rotatable drum (3) as a function of the white slag temperature detected by the temperature detector and/or as a function of the weight of material contained in the rotatable drum (3) detected by the load cell (403, 404).

16. System (1) according to claim 15, wherein the loading apparatus (2) comprises load detection sensors suitable for detecting the amount of material loaded in the loading apparatus (2) and wherein the programmable control device is configured to manage the loading and unloading of the white slag as a function of the amount of material loaded in the hopper detected by the load detecting sensors and the amount of white slag present inside the rotatable drum detected by the drum load cells (403, 404).

17. Method for the cooling and recycling of white slag resulting from a steel production process, comprising the following steps:
- storing the white slag in a loading apparatus;
- feeding an adjustable flow of white slag from the loading apparatus to the inside of a rotatable drum according to claim 1;
- controlled cooling of the white slag contained inside the rotatable drum by indirect thermal exchange with a coolant fluid that affects an internal chamber made in modular panels removably fixed to a frame of the rotatable drum, said controlled cooling being suitable to lead to a withering process of the white slag with consequent detachment of fragments and powder;
- selection and separation of such fragments and powder of white slag having a piece size smaller than a predetermined piece size.

18. Method according to claim 17, comprising the step of adjusting the inclination of the rotatable drum (3) as a function of the temperature of the white slag and/or as a function of the weight of the material contained in the rotatable drum (3).

## Patentansprüche

1. Drehbare Trommel (3), die geeignet ist, weiße Schlacke, die aus einem Stahlproduktionsprozess stammt, im Inneren aufzunehmen, **dadurch gekennzeichnet, dass** die drehbare Trommel (3) umfasst:
- einen Trommelrahmen (33);
- modulare Platten (35, 36, 37, 38, 39, 40, 41, 42, 43, 44, 45, 46, 47, 48, 49, 50), die abnehmbar auf dem Trommelrahmen (33) befestigt sind und die Seitenwände der drehbaren Trommel (3) bilden, wenn sie an dem Rahmen (33) befestigt sind,
wobei jede der modularen Platten Plattenwände (360) umfasst, die im Inneren mindestens eine Kammer (361) enthalten, die geeignet ist, von einem Kühlfluid (F) durchdrungen zu werden, um eine indirekte Kühlung der weißen Schlacke zu erreichen, wenn die weiße Schlacke in der Trommel (3) aufgenommen wird, mittels Wärmeaustausch zwischen der weißen Schlacke und den Plattenwänden (360),
wobei die Kammer (361) jeder der modularen Platten (35, 36, 37, 38, 39, 40, 41, 42, 43, 44, 45, 46, 47, 48, 49, 50) in Fluidverbindung mit der Kammer einer anderen der modularen Platten (35, 36, 37, 38, 39, 40, 41, 42, 43, 44, 45, 46, 47, 48, 49, 50) gebracht ist.

2. Drehbare Trommel (3) nach Anspruch 1, wobei jede der modularen Platten eine Vielzahl von Rohren (363) aufweist, die nebeneinander platziert und in einer Serpentine in Fluidverbindung miteinander angeordnet sind.

3. Drehbare Trommel (3) nach Anspruch 2, wobei die Plattenwände (360) zumindest teilweise aus den Seitenwänden der Vielzahl von Rohren (363) gebildet sind, die miteinander verbunden sind, und wobei die Kammer (361) zumindest teilweise aus der Vielzahl von inneren Hohlräumen der Rohre (363) in Fluidverbindung miteinander gebildet ist.

4. Drehbare Trommel (3) nach Anspruch 2 oder 3, wobei die Vielzahl von Rohren (363) einer jeden Platte an einer Stützwand (366) befestigt ist, die die Vielzahl von Rohren (363) mantelartig bedeckt.

5. Drehbare Trommel (3) nach einem der vorhergehenden Ansprüche, wobei der Trommelrahmen (33) Liefereinrichtungen für das Kühlfluid (F) von einem Zuführsystem (70) des Kühlfluids (F) hin zu den modularen Platten umfasst, wobei die Liefereinrichtungen Transportrohre (333) umfassen, die zumindest teilweise oder vollständig den Trommelrahmen (33) selbst bilden.

6. Drehbare Trommel (3) nach Anspruch 5, wobei die Transportrohre (333) so konfiguriert sind, dass sie einen Käfig bilden, der um die drehbare Trommel (3) herum angeordnet ist und der als Stützrahmen der modulare Platten dient.

7. Drehbare Trommel (3) nach einem der vorhergehenden Ansprüche, wobei jede der modularen Platten gemäß einer im Wesentlichen halbzylindrischen oder halbkegelstumpfförmigen Form geformt ist.

8. Drehbare Trommel (3) nach Anspruch 6 oder 7, wenn dieser von Anspruch 6 abhängt, wobei der Käfig rohrförmige Ringe (A1, A2, A3, A4, A5) umfasst, die beabstandet parallel zueinander entlang der Vorschubrichtung (Y) der weißen Schlacke angeordnet sind, sodass ein erster Kopfring (A1) in der Nähe einer Einlassöffnung für weiße Schlacke (380) in der drehbaren Trommel (3) positioniert ist und ein letzter Endring (A5) in der Nähe des Siebsegments (32) positioniert ist,
wobei jeder rohrförmige Ring (A1, A2, A3, A4, A5) mit einem oder zwei benachbarten rohrförmigen Ringen mittels Verbindungskanälen (334), bevorzugt geradlinigen, die in Umfangsrichtung (C) der rohrförmigen Ringe beabstandet angeordnet sind, und mit denjenigen, die sich von den rohrförmigen Ringen in einer Richtung abzweigen, die im Wesentlichen parallel zur Vorschubrichtung der weißen Schlacke ist, in Fluidverbindung gebracht ist.

9. System (1) zum Kühlen und Wiederverwerten von weißer Schlacke, die aus einem Stahlproduktionsprozess stammt, umfassend:
- ein Ladeapparat (2) der weißen Schlacke, geeignet um die weiße Schlacke aufzunehmen;
- eine drehbare Trommel (3) nach einem der Ansprüche 1 bis 8, die geeignet ist, die weiße Schlacke, die von dem Ladeapparat (2) kommt, im Inneren aufzunehmen, wobei die drehbare Trommel ein Kühlsegment (31) umfasst, das geeignet ist, die weiße Schlacke zu kühlen, um einen Austrocknungsprozess der weißen Schlacke zu induzieren und einem Siebsegment (32), das stromabwärts des Kühlsegments (31) angeordnet ist, wobei die Auswahl und Trennung von Fragmenten und Pulver der weißen Schlacke mit einer Teilchengröße kleiner als eine vorbestimmte Teilchengröße, durchgeführt wird;
- Zuführeinrichtungen (4) der weißen Schlacke, die konfiguriert sind, um die weiße Schlacke von dem Ladeapparat (2) zum Kühlsegment (31) der drehbaren Trommel (3) zu transportieren;
- erste Entladeeinrichtungen (5), die funktionsfähig mit dem Siebsegment (32) verbunden sind, zum Extrahieren von Fragmenten und Pulver der weißen Schlacke mit einer durchschnittlichen Teilchengröße kleiner als eine vorbestimmte Teilchengröße;
- zweite Entladeeinrichtungen (6), die funktionsfähig mit dem Siebsegment (32) verbunden sind, zum Extrahieren von Fragmenten und Pulver der weißen Schlacke mit einer durchschnittlichen Teilchengröße größer als eine vorbestimmte Teilchengröße;
wobei die indirekte Kühlung der weißen Schlacke erreicht wird, wenn die weiße Schlacke in das Kühlsegment (31) der Trommel (3) aufgenommen wird.

10. System (1) nach Anspruch 9, wobei die Ladevorrichtung (2) umfasst:
- einen Trichter (21),
- ein am Trichter (21) installiertes Gitter (22),
- Gitterbewegungseinrichtungen (210), die geeignet sind, dem Gitter eine Drehung aufzuerlegen, um das Restmaterial auf dem Gitter außerhalb des Trichters (21) umzuwerfen,
wobei der Trichter (21) auf der Seite des Entladens des Restmaterials auf dem Gitter eine externe bewegliche Wand (21b) umfasst, die geeignet ist, zum Öffnen bewegt zu werden, um das Restmaterial auf dem Gitter zu entladen.

11. System (1) nach Anspruch 9 oder 10, umfassend Drehbetätigungseinrichtungen (200), die geeignet sind, die Trommel (3) in Drehung zu versetzen mittels eines Systems aus Ritzel (201) und Krone (202), wobei die Krone (202) um die drehbare Trommel (3) befestigt ist, bevorzugt um einen rohrförmigen Ring (A2) des Rahmens (33).

12. System (1) nach Anspruch 11, wobei die Trommel (3) drehbar von einem oder mehr Ringen (90, 91) gestützt wird, die sich integral mit der drehbaren Trommel auf Stützrollen (100, 101) drehen, die geeignet sind, das Gewicht der Stützrollen (100, 101) zu stützen, um zu verhindern, dass das Gewicht der drehbaren Trommel von dem Ritzel (201) gestützt wird.

13. System (1) nach Anspruch 12, wobei die Stützrolle (100), entsprechend dem Ritzel (201), aus zwei unabhängigen drehenden Scheiben (100a, 100b), die an den Seiten des Ritzels (201) angeordnet sind, drehbar gestützt durch jeweilige Lager (100a', 100b`), die auf einer Motorwelle (204) montiert sind, wobei die unabhängigen drehenden Scheiben (100a, 100b) um eine Motordrehachse (R) drehbar sind, die mit der Drehachse des Motors (203) zusammenfällt und aus dem Ritzel (201) und unabhängig in Bezug auf die Motorwelle (204) und das Ritzel (201) aufgebaut ist.

14. System (1) nach einem der Ansprüche 9 bis 13, umfassend mindestens eine Trommelladungszelle (403, 404), die geeignet ist, das Gewicht des in der drehbaren Trommel (3) enthaltenen Materials zu erfassen.

15. System (1) nach Anspruch 14, umfassend einen Temperaturdetektor für die weiße Schlacke, der an der Entladeeinrichtung (5) installiert ist, eine programmierbare Steuervorrichtung und elektromechanische Buchsen, wobei die programmierbare Steuereinrichtung geeignet ist, Steuersignale an die elektromechanischen Buchsen zu senden, um die Neigung der drehbaren Trommel (3) einzustellen, in Abhängigkeit von der Temperatur der weißen Schlacke, die durch den Temperaturdetektor erfasst wird und/oder in Abhängigkeit vom Gewicht des in der drehbaren Trommel (3) enthaltenen Materials, das durch die Ladungszelle (403, 404) erfasst wird.

16. System (1) nach Anspruch 15, wobei die Ladevorrichtung Ladungserfassungssensoren umfasst, die geeignet sind, die in dem Ladeapparat (2) geladene Materialmenge zu erfassen und wobei die programmierbare Steuereinheit konfiguriert ist, das Laden und Entladen der weißen Schlacke in Abhängigkeit von der Materialmenge, die in den Trichter geladen ist, die durch die Ladungserfassungssensoren erfasst wird, und von der Menge der weißen Schlacke, die im Inneren der drehbaren Trommel vorhanden ist, die durch die Trommelladungszellen (403, 404) erfasst wird, zu kontrollieren.

17. Verfahren zum Kühlen und Weiterverwerten von weißer Schlacke, die aus einem Stahlproduktionsprozess stammt, umfassend die folgenden Schritte:
- Lagern der weißen Schlacke in einem Ladeapparat;
- Zuführen eines einstellbaren Stroms von weißer Schlacke von dem Ladeapparat in das Innere einer drehbaren Trommel nach Anspruch 1;
- kontrolliertes Kühlen der im Inneren der drehbaren Trommel enthaltenen weißen Schlacke durch indirekten Wärmeaustausch mit einem Kühlfluid, das eine aus modularen Wänden, die abnehmbar auf einem Rahmen der drehbaren Trommel befestigt sind, aufgebaute innere Kammer beeinflusst, wobei das kontrollierte Kühlen geeignet ist, zu einem Austrocknungsprozess der weißen Schlacke mit nachfolgender Ablösung von Fragmenten und Pulver zu führen;
- Auswahl und Trennung von solchen Fragmenten und Pulver der weißen Schlacke mit einer Teilchengröße kleiner als eine vorbestimmte Teilchengröße.

18. Verfahren nach Anspruch 17, umfassend den Schritt der Einstellung der Neigung der drehbaren Trommel (3) in Abhängigkeit der Temperatur der weißen Schlacke und/oder in Abhängigkeit des Gewichts des Materials, das in der drehbaren Trommel (3) enthalten ist.

## Revendications

1. Tambour rotatif (3), adapté à recevoir des scories blanches à l'intérieur de celui-ci résultant d'un processus de production d'acier, **caractérisé en ce que** ledit tambour rotatif (3) comprend :
- un bâti de tambour (33) ;
- des panneaux modulaires (35, 36, 37, 38, 39, 40, 41, 42, 43, 44, 45, 46, 47, 48, 49, 50) fixés de manière amovible audit bâti de tambour (33) et formant les parois latérales dudit tambour rotatif (3) lorsqu'elles sont fixées au bâti (33),
chacun desdits panneaux modulaires comprenant des parois de panneau (360) qui contiennent en interne au moins une chambre (361) adaptée à être imprégnée d'un fluide de refroidissement (F), pour obtenir un refroidissement indirect des scories blanches lorsqu'elles sont reçues dans le tambour (3) au moyen d'un échange thermique entre lesdites scories blanches et les parois de panneau (360),
la chambre (361) de chacun desdits panneaux modulaires (35, 36, 37, 38, 39, 40, 41, 42, 43, 44, 45, 46, 47, 48, 49, 50) étant mise en communication fluidique avec la chambre d'un autre des panneaux modulaires (35, 36, 37, 38, 39, 40, 41, 42, 43, 44, 45, 46, 47, 48, 49, 50).

2. Tambour rotatif (3) selon la revendication 1, chacun desdits panneaux modulaires comprenant une pluralité de tuyaux (363) placés côte à côte et agencés pour former un serpentin en communication fluidique les uns avec les autres.

3. Tambour rotatif (3) selon la revendication 2, les parois de panneau (360) étant constituées au moins en partie par les parois latérales de la pluralité de tuyaux (363) assemblés ensemble et la chambre (361) étant constituée au moins en partie par la pluralité de cavités internes des tuyaux (363) en communication fluidique les unes avec les autres.

4. Tambour rotatif (3) selon la revendication 2 ou 3, la pluralité de tuyaux (363) de chaque panneau étant fixée à une paroi de support (366) qui recouvre la pluralité de tuyaux (363) comme un manteau.

5. Tambour rotatif (3) selon l'une quelconque des revendications précédentes, le bâti de tambour (33) comprenant des moyens d'approvisionnement du fluide de refroidissement (F) depuis un système d'alimentation (70) du fluide de refroidissement (F) en direction des panneaux modulaires, lesdits moyens d'approvisionnement comprenant des tuyaux de distribution (333) qui constituent au moins en partie ou en totalité le bâti de tambour (33) lui-même.

6. Tambour rotatif (3) selon la revendication 5, les tuyaux de distribution (333) étant configurés de façon à former une cage disposée autour du tambour rotatif (3) et qui sert de bâti de support des panneaux modulaires.

7. Tambour rotatif (3) selon l'une quelconque des revendications précédentes, chacun desdits panneaux modulaires étant mis en forme selon une forme sensiblement semi-cylindrique ou semi-tronconique.

8. Tambour rotatif (3) selon la revendication 6 ou 7 lorsqu'elle dépend de la revendication 6, la cage comprenant des bagues tubulaires (A1, A2, A3, A4, A5) agencées parallèlement les unes aux autres d'une manière espacée le long de la direction de progression (Y) des scories blanches, de sorte qu'une première bague de tête (A1) soit positionnée à proximité d'une embouchure d'entrée de scories blanches (380) dans le tambour rotatif (3) et au moins une bague de queue (A5) soit positionnée à proximité du segment de criblage (32),
chaque bague tubulaire (A1, A2, A3, A4, A5) étant placée en communication fluidique avec une ou deux bagues tubulaires adjacentes au moyen de conduits de jonction (334), de préférence rectilignes, agencés d'une manière espacée le long de la direction circonférentielle (C) des bagues tubulaires et qui bifurquent desdites bagues tubulaires le long d'une direction sensiblement parallèle à la direction de progression (Y) des scories blanches.

9. Système (1) pour refroidir et recycler des scories blanches résultant d'un processus de production d'acier, comprenant :
- un appareil de chargement (2) des scories blanches, adapté à recevoir les scories blanches ;
- un tambour rotatif (3) selon l'une quelconque des revendications 1 à 8, adapté à recevoir à l'intérieur de celui-ci les scories blanches provenant de l'appareil de chargement (2), ledit tambour rotatif (3) comprenant un segment de refroidissement (31) adapté à refroidir les scories blanches et induire un processus de flétrissement des scories blanches, et un segment de criblage (32), placé en aval du segment de refroidissement (31), dans lequel la sélection et la séparation de fragments et de poudre des scories blanches ayant une grosseur inférieure à une grosseur prédéterminée sont réalisées ;
- un moyen d'alimentation (4) des scories blanches configuré pour transporter les scories blanches depuis l'appareil de chargement (2) vers le segment de refroidissement (31) du tambour rotatif (3) ;
- un premier moyen de déchargement (5), associé de manière opérationnelle au segment de criblage (32), pour l'extraction de fragments et de poudre de scories blanches ayant une grosseur moyenne inférieure à une grosseur prédéterminée ;
- un second moyen de déchargement (6), associé de manière opérationnelle au segment de criblage (32), pour l'extraction de fragments et de poudre ayant une grosseur moyenne supérieure à une grosseur prédéterminée ;
le refroidissement indirect des scories blanches étant obtenu lorsque les scories blanches sont reçues dans le segment de refroidissement (31) du tambour (3).

10. Système (1) selon la revendication 9, l'appareil de chargement (2) comprenant :
- une trémie (21),
- une grille (22) installée sur la trémie (21),
- un moyen de mouvement de grille (210) adapté à imposer une rotation sur la grille de façon à renverser le matériau résiduel sur la grille à l'extérieur de la trémie (21),
ladite trémie (21) comprenant, sur le côté du déchargement de matériau résiduel sur la grille, une paroi mobile externe (21b), adaptée à être déplacée de façon à s'ouvrir pour permettre le déchargement du matériau résiduel sur la grille.

11. Système (1) selon la revendication 9 ou 10, comprenant un moyen d'actionnement en rotation (200) adapté à placer le tambour (3) en rotation au moyen d'un système à pignon (201) et couronne (202), ladite couronne (202) étant fixée autour du tambour rotatif (3), de préférence autour d'une bague tubulaire (A2) du bâti (33).

12. Système (1) selon la revendication 11, le tambour (3) étant supporté d'une manière rotative par une ou plusieurs bagues (90, 91) qui entrent en rotation d'un seul tenant avec le tambour rotatif sur des galets de support (100, 101), adaptés à pour supporter le poids du tambour rotatif, de façon à empêcher ledit poids du tambour rotatif d'être supporté par le pignon (201).

13. Système (1) selon la revendication 12, le galet de support (100), en correspondance avec le pignon (201), étant composé de deux disques rotatifs indépendants (100a, 100b), agencés aux côtés du pignon (201), supportés de manière rotative par des paliers respectifs (100a', 100b') montés sur un arbre de moteur (204), lesdits disques rotatifs indépendants (100a, 100b) étant rotatifs autour d'un axe de rotation de moteur (R) coïncidant avec l'axe de rotation du moteur (203) et du pignon (201) et indépendamment par rapport à l'arbre de moteur (204) et au pignon (201).

14. Système (1) selon l'une quelconque des revendications 9 à 13, comprenant au moins une cellule de charge de tambour (403, 404), adaptée à détecter le poids du matériau contenu dans le tambour rotatif (3).

15. Système (1) selon la revendication 14, comprenant un détecteur de température de scories blanches, installé sur le moyen de déchargement (5), un dispositif de commande programmable et des connecteurs électromécaniques, ledit dispositif de commande programmable étant adapté à envoyer des signaux de commande aux connecteurs électromécaniques de façon à ajuster l'inclinaison du tambour rotatif (3) en fonction de la température de scories blanches détectée par le détecteur de température et/ou en fonction du poids du matériau contenu dans le tambour rotatif (3) détecté par la cellule de charge (403, 404).

16. Système (1) selon la revendication 15, l'appareil de chargement (2) comprenant des capteurs de détection de charge adaptés à détecter la quantité de matériau chargée dans l'appareil de chargement (2) et le dispositif de commande programmable étant configuré pour gérer le chargement et le déchargement des scories blanches en fonction de la quantité de matériau chargée dans la trémie détectée par les capteurs de détection de charge et la quantité de scories blanches présente à l'intérieur du tambour rotatif détectée par les cellules de charge de tambour (403, 404).

17. Procédé pour le refroidissement et le recyclage de scories blanches résultant d'un processus de production d'acier, comprenant les étapes suivantes :
- le stockage des scories blanches dans un appareil de chargement ;
- l'acheminement d'un flux ajustable de scories blanches depuis l'appareil de chargement vers l'intérieur d'un tambour rotatif selon la revendication 1 ;
- le refroidissement commandé des scories blanches contenues à l'intérieur du tambour rotatif par échange thermique indirect avec un fluide de refroidissement qui affecte une chambre interne réalisée dans des panneaux modulaires fixés de manière amovible à un bâti du tambour rotatif, ledit refroidissement commandé étant adapté à conduire à un processus de flétrissement des scories blanches avec un détachement consécutif de fragments et de poudre ;
- la sélection et la séparation de tels fragments et poudre de scories blanches ayant une grosseur inférieure à une grosseur prédéterminée.

18. Procédé selon la revendication 17, comprenant l'étape d'ajustement de l'inclinaison du tambour rotatif (3) en fonction de la température des scories blanches et/ou en fonction du poids du matériau contenu dans le tambour rotatif (3).
